# EUROPEAN PATENT SPECIFICATION

(11) **EP 2 136 476 B1**
(45) Date of publication and mention of the grant of the patent: **19.12.2018**
(21) Application number: 08104488.5
(22) Date of filing: 20.06.2008
(51) Int. Cl.: H04B 3/32

(54) **Method and device for data processing and communication system comprising such device**
Verfahren und Vorrichtung zur Datenverarbeitung und Kommunikationssystem mit einer derartigen Vorrichtung
Procédé et dispositif de traitement de données et système de communication comprenant un tel dispositif

(43) Date of publication of application: 23.12.2009
(73) Proprietor: ADTRAN GmbH, 10557 Berlin (DE)
(72) Inventor: Bianchi, Roberto, 91056 Erlangen (DE); Haustein, Thomas, Dr., 81735 München (DE); Mück, Josef, 81675 München (DE); Schweyer, Bernhard, 82433 Bad Kohlgrub (DE); Treyer, Thomas, 81379 München (DE); Zirwas, Wolfgang, 81249 München (DE)
(74) Representative: Brachmann, Roland W.

(56) References cited:
- WO-A-2008/024967
- DE-A1-102006 051 435

## Description

The invention relates to a method and to a device for data processing and to a communication system comprising such a device.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52 Mbit/s in downstream - 12 Mbit/s in upstream with asymmetric access.

Currently, standard VDSL uses up to 4 different frequency bands, two for upstream (from the client to the telecom provider) and two for downstream. Suitable modulation techniques are QAM (quadrature amplitude modulation) or DMT (discrete multitone modulation).

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices (COs), from fiber-fed cabinets preferably located near the customer premises, or within buildings.

ITU-T G.993.2 (VDSL2) is an enhancement to G.993.1 (VDSL) that permits the transmission of asymmetric and symmetric (full duplex) aggregate data rates up to 200 Mbit/s on twisted pairs using a bandwidth up to 30 MHz.

The xDSL wide band modulation approaches are susceptible regarding crosstalk interference that is introduced to the twisted pair transmission line and received by the modem.

Crosstalk occurs when wires are coupled, in particular between wire pairs of the same or a nearby bundle that are used for different signal transmission. Hence, data signals from one or more sources can be superimposed on and contaminate a data signal. The crosstalk comprises a near-end crosstalk (NEXT) and a far-end crosstalk (FEXT).

Based on such crosstalk, data signals transmitted over twisted-pair lines can be considerably degraded by the crosstalk interference generated on one or more adjacent twisted-pair phone line in the same and/or a nearby multi-core cable or bundle. With an increasing transmission speed, this situation even deteriorates, which may significantly limit a maximum data rate to be transmitted via a single line.

Furthermore, idle data sent induce crosstalk interference and hence disturb user data sent via other lines of, e.g., a multi-core cable. As there are typically 50 lines within one multi-core cable, such crosstalk could significantly impair the overall performance of the transmitting capability.

Regarding ADSL or VDSL systems there is an attempt to improve an overall capacity or coverage for VDSL systems by utilizing a suitable precoding mechanism, e.g., by a matrix multiplication processed at the transmitting side. As typical VDSL systems support up to 50 customer premises equipments (CPEs) over one single cable the full crosstalk channel matrix is of size 50x50, which leads to a significant processing effort.

Fortunately, the far end crosstalk (FEXT) between the lines of the cable is often rather small thus leading to a sparsely occupied crosstalk matrix. Typically, the crosstalk matrix has basically a block diagonal structure that stems from the fact that the cable is separated into sub-bundles with high crosstalk, while the crosstalk of the sub-bundles is reduced due to a special drilling of said sub-bundles.

Precoding techniques like zero-forcing or MMSE estimation are known and may be utilized to at least partially compensate the crosstalk.

DSL layer 3 involves in particular the following challenges:
a) Processing of the precoding matrix at the central office (CO) may require processing a 50x50 precoding matrix, which results in a significant area on the chip and hence high power consumption. Hence, for systems to be practicable, useful solutions are required resulting in high performance gains at a moderate processing effort.
b) Up to 100 lines (50 lines in and 50 lines out) are attached to the precoding processing unit.
c) Ideally, almost no or only minimal changes to the current ADSL standard would be helpful for a new solution to remain (at least partially) compatible with existing equipment.
d) Estimation of all frequency selective cable channels and especially of crosstalk from each input to each output line with high accuracy and low protocol overhead would be required.

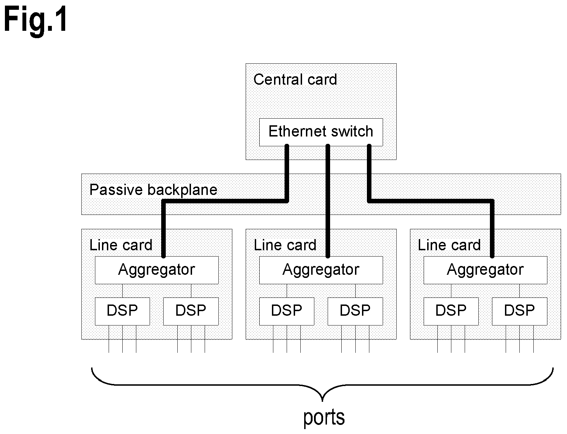

In a DSLAM architecture according to **Fig.1** several line cards are provided in parallel, each comprising an IP connection via a passive backplane towards an Ethernet switch of a central card. Furthermore, each line card serves several ports, e.g., 12 or 24 ports.

These ports of the line cards are arbitrarily connected to the physical lines. One reason is that physical lines are attached in the order of user requests for being provided with a DSL connection. Hence, the lines attached to the ports of one particular line card may be associated with different cable bundles or, even worse, the lines attached to a single line card receive interference or crosstalk from lines that are attached to other line cards (as all such lines may be merged to one cable bundle).

This issue results in a significant challenge for multiple-input-multiple-output (MIMO) techniques like joint transmission and/or joint detection as it may not be possible to perform such processing on a single line card in particular as there is no fast direct interconnection between line cards available. An example of prior art can be found in the document WO 2008/024967.

Currently, operators assign a new customer or subscriber to the next free port of a VDSL line card. So far, no information of potential crosstalk is available. Hence, there is no order of connecting subscribers or upgrading customers, e.g., to VDSL services. As a consequence, wires of a cable binder can be connected to several VDSL line cards and/or to a VDSL line card comprising several (e.g., 48) ports.

Existing DSLAM architecture disadvantageously thus does not provide good joint transmission crosstalk cancellation options.

The **problem** to be solved is to overcome the disadvantages set forth above and in particular based on the current architecture to provide crosstalk cancellation, even in case usual lines of one bundle or cable binder are distributed over several line cards.

This problem is solved according to the features of the independent claims. Further embodiments result from the depending claims.

In order to overcome this problem, a method for data processing at a network component is provided comprising the following steps:
- a multiple-input-multiple-output (MIMO) processing is conducted and
- based on such processing a crosstalk and/or interference is at least partially reduced or cancelled.

For the operator this approach is of great benefit as it allows to add crosstalk cancellation with the current cable infrastructure preferably via software update in a plug and play manner.

In an embodiment, said network component is or is associated with a central office (CO) and/or a digital subscriber line access multiplexer (DSLAM).

In another embodiment, the network component is attached to or comprises several line cards to which digital subscriber lines are attached.

It is noted that the line cards may be capable of processing optical signals and/or electrical signals.

In a further embodiment, said digital subscriber lines are at least partially merged into at least one cable binder.

In a next embodiment, receive and/or transmit multiple-input-multiple-output processing is provided at a central card that is connected via an passive backplane to at least one line card.

It is also an embodiment that the central card comprises an Ethernet switch to be connected to a discrete multi tone (DMT) unit at each line card connected.

Pursuant to another embodiment, said receive and/or transmit multiple-input-multiple-output processing is done, mapped to discrete multi tones and conveyed via said Ethernet switch towards the at least one line card.

According to an embodiment, a clock signal is conveyed from said central card to enable substantially coherent operations of and/or at the at least one line card, in particular at the port of the at least one line card.

It is an embodiment that receive and/or transmit multiple-input-multiple-output (MIMO) processing is provided, in particular substantially in parallel and/or substantially synchronously.

According to another embodiment, receive and/or transmit multiple-input-multiple-output (MIMO) processing is provided at the at least one line card.

In yet another embodiment, said receive and/or transmit multiple-input-multiple-output processing is done substantially in parallel and/or substantially synchronously.

According to a next embodiment, multiple-input-multiple-output processing is synchronized on different line cards. Pursuant to yet an embodiment, a parameter (e.g., a MIMO-weight or the like) for multiple-input-multiple-output processing is conveyed from the at least one line card to a central card and/or vice versa.

It is another embodiment that fixed scheduling and/or bitloading rules are utilized for synchronization purposes.

The problem stated above is also solved by a device comprising a and/or associated with a processor unit and/or a hardwired circuit and/or a logic device that is arranged such that the method as described herein is executable on said processor unit.

According to an embodiment, the device is a communication device, in particular a or associated with a central office or digital subscriber line access multiplexer.

The problem stated supra is further solved by a communication system comprising the device as described herein.

Embodiments of the invention are shown and illustrated in the following figures:
- Fig.2: shows a DSLAM architecture with CPEs attached to a CO via a cable bundle;
- Fig.3: shows a block diagram of a DSLAM comprising a central card with centralized MIMO processing capability;
- Fig.4: shows a block diagram of a block diagram of a DSLAM for distributed crosstalk cancellation.

The approach provided allows for an efficient data MIMO (pre-)processing at a network component, in particular at a CO or at a DSLAM. Based on such preprocessing any kind of disturbance or noise, in particular crosstalk and/or interference may be reduced and/or at least partially cancelled.

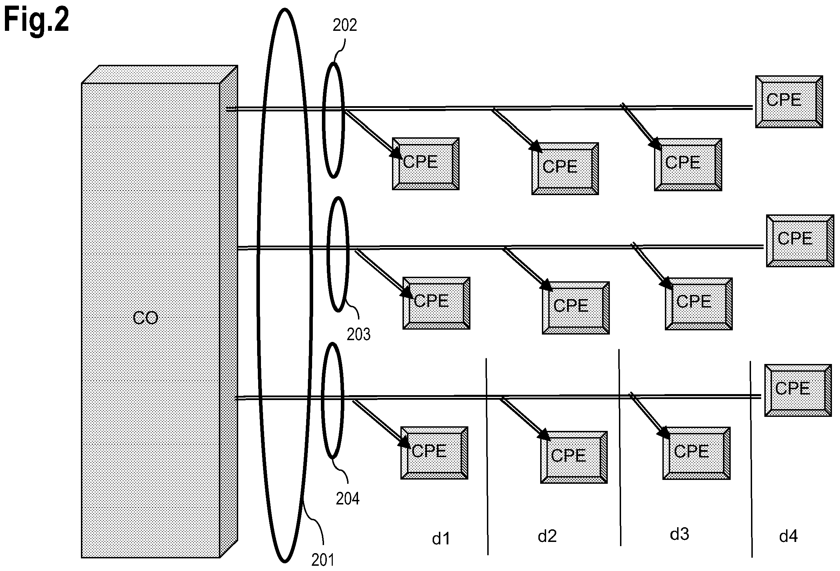

**Fig.2** shows an exemplary DSLAM architecture comprising a central office CO that is connected via a cable bundler 201 comprising several sub-bundles 202, 203 and 204 with higher mutual crosstalk to customer premises equipments CPEs that are located at various distances d1 to d4 from the central office CO.

Hereinafter, exemplary embodiments of such efficient preprocessing are described.

### Solution (a):

In this approach, the network component comprises a central card or entity providing a central processing functionality for at least one line card that is connected to and/or associated with the network component.

Such central card or entity may refer to or be associated with a central functionality, e.g., a program running at the network component or being associated with the network component, enabling said central processing functionality.

The central card or entity may be used to replace an existing function of the network component. It may also be added to said existing function of the network component.

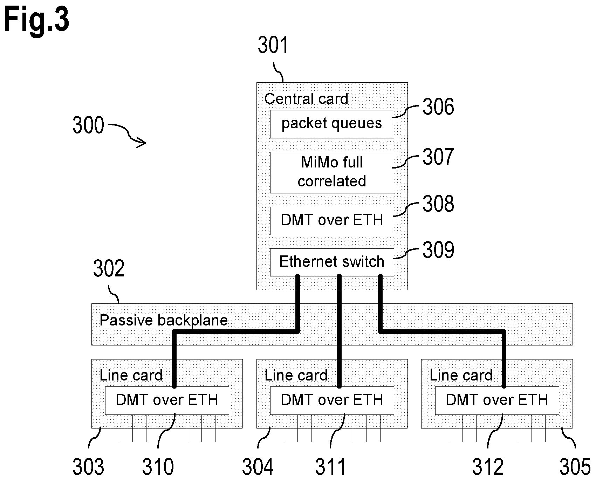

**Fig.3** shows a block diagram of a DSLAM 300 comprising a central card 301 that is connected via a passive backplane 302 to line cards 303, 304 and 305. Each line card is connected to several digital subscriber lines that may be merged to one or more cable binders (not shown).

The central card 301 comprises packet queues 306, MIMO processing means 307, DMT to Ethernet processing means 308 and an Ethernet switch 309.

Each line card 303 to 305 comprises a DMT unit 310 to 312 that is fed with MIMO processed data via the Ethernet switch 309. The DMT unit 310 is further connected to the digital subscriber lines in order to convey data towards the CPEs.

In this approach, the receive and transmit MIMO processing and/or calculation is done in the central card 301. Hence, interference and/or crosstalk can be reduced or at least partially cancelled between any ports of the DSLAM 300, in particular regarding interferences between line cards 303 to 305.

After being determined or calculated, the discrete multi tones (DMTs) for transmission are encapsulated in Ethernet frames and are sent via the Ethernet switch 309 over the passive backplane 302 to the line cards 303 to 305. At the respective line card 303 to 305 the DMT unit 310 to 312 removes the Ethernet encapsulation and sends the DMT data over the digital subscriber line drivers to the twisted pair cables.

In receive or upstream direction, the DMTs are measured in the line card 303 to 305, the DMTs determined are then encapsulated in Ethernet frames and sent over the passive backplane 302 to the Ethernet switch 309 of the central card 301. In this case, the central card 301 can as well do a fully coherent calculation over all DSL ports in order to suppress and/or reduce crosstalk and/or interference.

The transmission of DMTs over the passive backplane 302 may require VDSL2 256 Mbit/s (e.g., 2000 frequencies, 16 bits per number, real and imaginary parts per frequency, 4kHz sampling interval) per DSL port, which corresponds to a packet payload of 100 Mbit/s. Compared to the amount of data to be transferred, the DMT transfer over the passive backplane 302 is only 2.5 times larger than transferring the packet payload directly over the backplane. It is, however, a main difference that in the case of direct packet payload transfer, statistical multiplexing is possible, which is not in the case of DMT transfer.

This analogy changes completely if MIMO over different line cards is considered. Regarding the scenario of DMT transfer over Ethernet (i.e. the passive backplane 302) as shown in Fig.3, the amount of data transmitted does not change. In case of packet payload transfer, however, all packets need to be transmitted to all line cards. If there are more than two line cards, the DMT transfer described leads to significantly less data generated for the passive backplane 302.

As an option, an additional clock (e.g., at a frequency of 4 kHz) can be distributed from the central card 301 over the passive backplane 302 to all line cards 303 to 305 in order to allow a coherent operation of several (in particular all) DSL ports.

The Ethernet transmission described, however, may not have to be synchronized. A jitter in the Ethernet transmission may be significantly below 4 kHz, hence the DMT data in the Ethernet frames can be mapped to the proper 4 kHz interval.

### Solution (b):

As an alternative to solution (a), a distributed approach may be utilized without a deployment of a particular central processing unit.

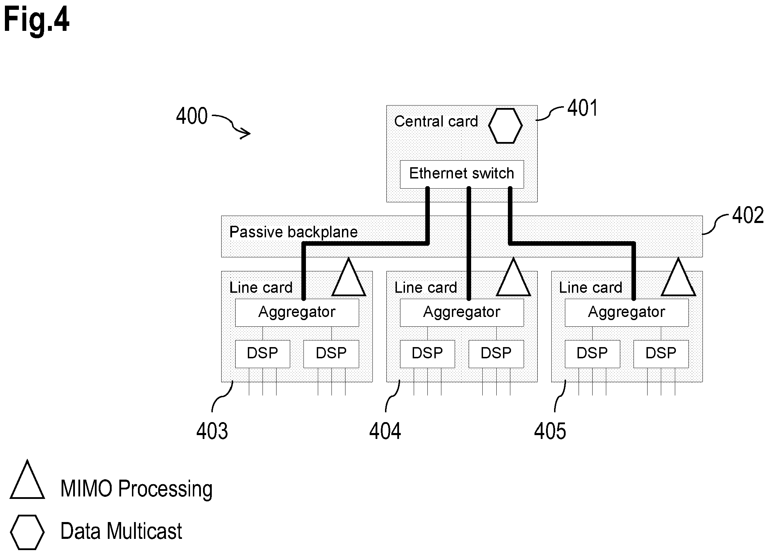

**Fig.4** shows a central card 401 comprising an Ethernet switch that is coupled via a passive backplane 402 to several line cards 403 to 405. Each line card 403 to 405 has an aggregator and a digital signal processor to which several digital subscriber lines are connected. The central card 401 provides data multicast and each line card provides MIMO processing.

Instead of such central processing entity or function, the MIMO (pre-)processing like joint transmission may be provided at the line cards involved, wherein such processing can be done in parallel and/or synchronously without any direct data exchange required between the line cards themselves.

In case that the MIMO processing on the line cards is exactly the same, there may be no difference between the distributed or central processing.

A particular task for this solution (b) is to "synchronize" MIMO processing on different line cards.

Hence, in particular the following requirements may be met:
i) Any weights for MIMO processing, i.e. results of channel estimations determined may be transmitted from the line cards to the central card and afterwards distributed from the central card to all line cards involved.
   Regarding VDSL systems, channel weights may be exchanged or distributed at a low speed as they are regarded quite stable over a considerably long period of time.
   Instead of utilizing the central card for exchanging MIMO weights, crosstalk channels can be used for data exchange as well.
ii) Data for all ports involved from all line cards involved may need to be multiplexed to all line cards involved. IP multicast groups may be used for such purpose, i.e. for distributing data to several line cards.
iii) Additionally, fixed scheduling and bitloading rules may be provided to ensure that data is transmitted in a synchronized manner.

A precise timing may be required for synchronizing transmit frames and/or receive frames in the order of one time sample. This may be feasible within a shelter where all line cards may be supplied by one local oscillator. For this purpose, an additional clock (e.g., at a frequency of 4 kHz) with respect to dynamic spectrum management (DSM) spanning over several DSLAMs could be provided that allows synchronizing several DSLAMs to one master clock. Such master clock could be deployed externally.

The following solutions may apply to achieve an efficient distributed crosstalk and/or interference handling:
(1) The DSLAM will have to deal with a high amount of data traffic due to multicasting same data to several line cards. Such data traffic may exceed a maximum data rate of the Ethernet lines within the DSLAM. However, the amount of data can be reduced utilizing in particular at least one of the following concepts:
   a. Only if data is to be transmitted over a specific port, the data will be multicast to the line cards involved. During idle time, transmission data can be generated at the line cards according to predefined rules so that this data does not have to be sent over the Ethernet line.
   b. MIMO processing can be restricted to such (few) lines that lead to significant crosstalk with one another. Hence, cancelling or reducing crosstalk for these lines leads to a significant performance gain in case of MIMO pre-processing or post-processing.
      The decision regarding lines that substantially contribute to crosstalk effects can be made, e.g., based on thresholds and/or separately for each sub-carrier. Due to slow variations inherent to the VDSL system, the decision about subcarriers which shall participate in crosstalk cancellation can be done at a low time scale hence resulting in a low amount of additional data overhead to be processed by the central card.
      Only a portion of the overall data can be sent for a specific CPE to all line cards involved thereby generating a significant amount of crosstalk on specific subcarriers. The line cards (as an option, additionally an information about the overall amount of data for a specific time frame may be given to the line card) may use specific mapping rules so that MIMO processing is done for the predefined subcarriers generating crosstalk to other lines of the cable binder (bundle).
      Bit loading as well as selection of a modulation and coding scheme (MCS) may be done based on predefined rules to synchronize the data transmission.
      The data distribution to the digital subscriber lines affected may be provided based on multicast groups, wherein all digital subscriber lines affected need to join the multicast group. These multicast groups can be different for the same line cards and they can be associated with different subcarriers and different ports.
(2) Each line card may comprise and/or be associated with a (small) data buffer to compensate delay differences resulting from different Ethernet connections.
(3) To avoid different scheduling decisions between line cards in case of HARQ retransmission, a reserved channel for HARQ retransmission may be provided without joint MIMO processing at the main CPE line.
(4) Interfering lines with strong crosstalk need to be identified to allow for an efficient block-diagonalized MIMO preprocessing, i.e. to achieve a high performance gain at a feasible or efficient processing effort. Hence, existing, upcoming or already defined measurement procedures or solutions like information transfer over crosstalk could be utilized.

Furthermore, MIMO groups can be built mapping ports on a DSLAM level. However, such mapping may be a time consuming process. It can thus be an approach to store (e.g., regularly, such as every weekday) MIMO groups that have already been identified to be reused for fast adaptation purposes. This advantageously allows for a fast adjustment to particular user behavior: For example, IPTV at evening primetime results in different crosstalk dependency compared to business traffic during weekdays or low traffic after midnight.

Advantageously, lines of strong mutual crosstalk once identified shall be stored at the central office.

### Implementation and Advantages

One particular advantage provided by this approach is that crosstalk cancellation can be supplied to already deployed systems by adding a central MIMO processing card or by updating a firmware of a system.

Thus, an operator has the benefit of an improved performance without any need for rearrangement of physical lines to line cards, just by replacing available line cards or by a software and/or firmware update.

The approach may enable plug and play, i.e. comprising identification of line cards with large crosstalk, definition of multicast groups, organization of the distributed MIMO processing etc.

The solution (a), MIMO processing at the central card, is in particular useful if a high number of lines show crosstalk. The solution (b), distributed MIMO processing, however, can be advantageously utilized in case there are few lines which cause significant trouble, e.g., in case of a minor number of CPEs that are connected via long lines to the CO and are therefore very susceptible to crosstalk.

### Abbreviations:

- ACK: acknowledge
- ADC: analog-to-digital converter
- AGC: automatic gain control
- ARQ: automatic repeat-query (or query)
- CO: central office
- CPE: customer premises equipment
- DL: downlink
- DMT: discrete multi tone
- DSL: digital subscriber line
- DSLAM: digital subscriber line access multiplexer
- DSP: digital signal processing
- HARQ: hybrid automatic repeat request
- MC: multicast
- MCS: modulation and coding scheme
- MIMO: multiple-input-multiple-output
- MS: mobile station
- MMSE: minimum mean square error estimation
- NACK: not acknowledge
- PSD: power spectral density
- SC: sub-carrier
- ZF: zero forcing

## Claims

1. A method for reducing crosstalk on digital subscriber lines at a digital subscriber line access multiplexer comprising several line cards to which said digital subscriber lines are attached, wherein the crosstalk reduction is based on a receive and/or transmit multiple-input-multiple-output processing provided at a central card
**characterized in that**
the central card comprises an Ethernet switch to be connected to a discrete multi tone unit at each line card connected, and that discrete multi tones are sent via the Ethernet switch to the line cards.

2. The method according to claim 1, wherein said digital subscriber lines are at least partially merged into at least one cable binder.

3. The method according to any of claims 1 or 2, wherein the central card is connected via a passive backplane to the several line cards.

4. The method according to any of the preceding claims,
wherein a clock signal is conveyed from said central card to enable coherent operations of and/or at the line cards, in particular at the port of the at least one line card.

5. The method according to any of the preceding claims,
wherein receive and/or transmit multiple-input-multiple-output processing is provided, in parallel and/or synchronously.

6. A device for reducing crosstalk on digital subscriber lines comprising:
- means for attaching digital subscriber lines,
- means for providing a receive and/or transmit multiple-input-multiple-output processing,
- an Ethernet switch, **characterised by**,
- several lines cards having a discrete multi tone unit connected to the Ethernet switch,
- means for sending discrete multi tones via the Ethernet switch to the line cards.

7. Communication system comprising the device according to claim 6.

## Patentansprüche

1. Verfahren zum Verringern von Übersprechen bei digitalen Teilnehmeranschlüssen an einem Zugangsmultiplexer für einen digitalen Teilnehmeranschluss, umfassend verschiedene Leitungskarten, an denen die digitalen Teilnehmeranschlüsse befestigt sind, wobei die Übersprechenverringerung auf einer an einer zentralen Karte bereitgestellten Empfangs- und/oder Sendeverarbeitung für mehrere Eingänge und mehrere Ausgänge (Multiple-Input-Multiple-Output) basiert, **dadurch gekennzeichnet, dass**
die zentrale Karte einen Ethernet-Switch umfasst, der mit einer Einheit für diskrete Mehrtöne an jeder verbundenen Leitungskarte zu verbinden ist, und dass diskrete Mehrtöne über den Ethernet-Switch zu den Leitungskarten gesendet werden.

2. Verfahren nach Anspruch 1, wobei die digitalen Teilnehmeranschlüsse zumindest teilweise in zumindest einem Kabelbinder zusammengeführt werden.

3. Verfahren nach einem der Ansprüche 1 oder 2, wobei die zentrale Karte über eine passive Backplane mit den verschiedenen Leitungskarten verbunden wird.

4. Verfahren nach einem der vorstehenden Ansprüche, wobei ein Taktsignal von der zentralen Karte übertragen wird, um kohärente Vorgänge der und/oder an den Leitungskarten, insbesondere an dem Port der zumindest einen Leitungskarte, zu unterstützen.

5. Verfahren nach einem der vorstehenden Ansprüche, wobei eine Empfangs- und/oder Sendeverarbeitung für mehrere Eingänge und mehrere Ausgänge (Multiple-Input-Multiple-Output) parallel und/oder synchron vorgesehen ist.

6. Vorrichtung zum Verringern von Übersprechen an digitalen Teilnehmeranschlüssen, umfassend:
- ein Mittel zum Befestigen von digitalen Teilnehmeranschlüssen,
- ein Mittel zum Bereitstellen einer Empfangs- und/oder Sendeverarbeitung für mehrere Eingänge und mehrere Ausgänge (Multiple-Input-Multiple-Output),
- einen Ethernet-Switch, **gekennzeichnet durch**
- verschiedene Leitungskarten, die eine Einheit für diskrete Mehrtöne aufweisen, die mit dem Ethernet-Switch verbunden ist,
- ein Mittel zum Senden von diskreten Mehrtönen über den Ethernet-Switch zu den Leitungskarten.

7. Kommunikationssystem, umfassend die Vorrichtung nach Anspruch 6.

## Revendications

1. Procédé pour réduire la diaphonie sur des lignes d'abonné numérique au niveau d'un multiplexeur d'accès de ligne d'abonné numérique comprenant plusieurs cartes de ligne auxquelles lesdites lignes d'abonné numérique sont rattachées, la réduction de diaphonie reposant sur un traitement de réception et/ou d'émission à entrées multiples et sorties multiples effectué au niveau d'une carte centrale
**caractérisé en ce que**
la carte centrale comprend un commutateur Ethernet à relier à une unité à tonalités multiples discrètes au niveau de chaque carte de ligne connectée, et **en ce que** les tonalités multiples discrètes sont envoyées aux cartes de ligne par l'intermédiaire du commutateur Ethernet.

2. Procédé selon la revendication 1, dans lequel lesdites lignes d'abonné numérique sont au moins partiellement réunies dans au moins un dispositif de réunion de câbles.

3. Procédé selon la revendication 1 ou 2, dans lequel la carte centrale est reliée auxdites plusieurs cartes de ligne par l'intermédiaire d'un panneau arrière passif.

4. Procédé selon l'une quelconque des revendications précédentes, dans lequel un signal d'horloge est transporté depuis ladite carte centrale pour permettre des opérations cohérentes des cartes de ligne et/ou dans les cartes de ligne, en particulier au niveau du port de l'au moins une carte de ligne.

5. Procédé selon l'une quelconque des revendications précédentes, dans lequel un traitement de réception et/ou d'émission à entrées multiples et sorties multiples est effectué, en parallèle et/ou de façon synchrone.

6. Dispositif pour réduire la diaphonie sur des lignes d'abonné numérique, comprenant :
- un moyen pour fixer des lignes d'abonné numérique,
- un moyen pour effectuer un traitement de réception et/ou d'émission à entrées multiples et sorties multiples,
- un commutateur Ethernet, **caractérisé par**,
- plusieurs cartes de ligne possédant une unité à tonalités multiples discrètes reliée au commutateur Ethernet,
- un moyen pour envoyer des tonalités multiples discrètes aux cartes de ligne par l'intermédiaire du commutateur Ethernet.

7. Système de communication comprenant le dispositif selon la revendication 6.
